# EUROPEAN PATENT APPLICATION

(11) **EP 3 704 998 A1**
(43) Date of publication of application: **09.09.2020**
(21) Application number: 20160842.9
(22) Date of filing: 04.03.2020
(51) Int. Cl.: A47G 19/22, A47G 23/16, G01F 23/00, G01F 23/26

(54) **INTELLIGENT DRINKING CUP**

(30) Priority: 04.03.2019 NL 2022673
(71) Applicant: Janssen, Erik, 6114 JH Susteren (NL)
(72) Inventor: Janssen, Erik, 6114 JH Susteren (NL)
(74) Representative: van der Maarl, Arjan

(57) **Abstract**

Monitoring hydration of people is a tedious work, which is done most of the time also inaccurately. The current invention comprises a drinking cup (100) comprising:
- an opening (110) for outflow of a fluid (10) held in the cup (100);
- and a drinking sensor (120, 125) for detecting (230) drinking of the outflow of the fluid (10), wherein the drinking sensor (120, 125) is a capacitive drinking sensor (125.7, 125) comprising conductive strips (126, 172, 182) arranged substantially in line with each other forming a ring on the outside of the cup (100) and being arranged to the opening (110) for detecting (230) the presence of lips during the outflow.

The cup (100) according to the current invention provides the advantage of an improved accuracy of monitoring the hydration of a person drinking from the cup (100) making the work of caretakers easier and allowing for improved treatment.

## Description

### FIELD OF THE INVENTION

The invention relates to the field of intelligent drinking cups mostly used in care, such as day care for elderly people.

### BACKGROUND OF THE INVENTION

Of different kind of people, the hydration may need to be monitored. For new born babies the amount of milk drunk is important to monitor. The amount drunk may be an indication of the health of the new born. For elderly, dehydration may be an issue requiring hydration monitoring. Especially, needy elderly, such as elderly suffering from Alzheimer or dementia frequently forget to drink enough fluid to maintain a healthy hydration. These are examples of people needed to be monitored or encouraged to drink more liquid.

Another group of people may be people suffering from diseases causing them to drink too much. For example, people having certain kidney diseases may be discouraged to drink otherwise their kidneys may start to fail or even stop.

A known practice is to monitor the hydration with the use of a hydration list. Every time, before drinking from a cup, the amount of fluid in the cup is estimated and entered in the list. The estimation is typically rough. The assumption is that everything in the cup is drunk, which is not always the case. Furthermore, the list may get lost. And if for example a nurse monitors the hydration of a patient, maintaining the list takes a considerable amount of time and may be considered not the most interesting part of their work. Therefore, the use of a hydration list is cumbersome and inaccurate.

Another method used is measuring the weight of a person to be monitored several times a day. But the weight may be influenced by the intake of food and presence of clothing. Therefore, measuring the weight for monitoring the hydration also is cumbersome and inaccurate.

Even another method used is a skin turgor measurement. During a skin turgor measurement, the skin is firmly pulled up and the amount of time the skin needs to return to its original shape is a measure for the hydration of the person. Apart from being unpleasant, the measurement is inaccurate, especially for elderly as they tend to lose their natural skin elasticity.

WO2016145027 (A1) discloses that a wireless drink container can monitor a person's hydration and prompt him or her to drink more if appropriate. The drink containers as described herein can monitor liquid levels and communicate with external devices about the liquid levels and rate of consumption. One or more sensors in the drink container monitor the liquid level within the container. A processor coupled to the sensor(s) estimates how much liquid has been removed from the container from changes in the liquid level and transmits a signal representing the change in liquid level to a smartphone or other external device. It also triggers an audio or visual indicator, such as an LED, that prompts the user to drink more based on the user's estimated liquid consumption and on the user's liquid consumption goals, which may be based on the user's physiology, activity level, and location. A disadvantage of this wireless drinking container is that it only monitors the change of liquid in the wireless drinking container.

KR 2017 0077419 A discloses a smart cup that can detect the contact of the drinker's lips in contact with the water receiving portion of the cup, and measure the volume of water. The smart cup has a lip detection unit. A disadvantage of this smart cup is that when contact is sensed, the water leaving the cup is always assumed to be drunk. Other examples of cups are WO 2015/175969 A1, CN 107 928 296 A, CN 105 243 286 B, CN 104 764 506 A and CN 103 750 7012 A.

### SUMMARY OF THE INVENTION

An object of the invention is to provide a drinking cup that monitors the intake by a person from the cup.

According to a first aspect of the invention, a cup comprising:
- an opening for outflow of a fluid held in the cup; and
- a drinking sensor for detecting drinking of the outflow of the fluid,
wherein the drinking sensor is a capacitive drinking sensor comprising conductive strips arranged substantially in line with each other forming a ring on the outside of the cup and being arranged to the opening for detecting the presence of lips during the outflow.

A cup typically comprises a wall defining an inner space for holding a fluid, such as a liquid. The cup comprises an opening for outflow of the fluid held in the cup. This fluid is typically held in the inner space. The opening for the outflow of the cup is typically also the opening used for the inflow of fluid. Alternatively, the cup comprises a separate opening for the inflow of the fluid.

Hydration of people may be monitored, such as for patients, elderly and babies. Improving the accuracy of hydration monitoring causes less babies and elderly to suffer from unhealthy hydration, such as dehydration. Improving the accuracy of hydration monitoring causes some type of patients from drinking too much.

It is an insight of the inventor that an issue with the current measurement methods is that it is unknown if the fluid from the cup is really drunk or not. For example, the fluid may be poured from the cup into a sink without drinking the fluid. Therefore, detecting if the fluid that flowed out of the cup is drunk has the technical effect of improving the accuracy of monitoring of the hydration of the person.

In an embodiment of the drinking sensor, the drinking sensor is suitable for detecting the presence of lips of a mouth of a person drinking from the cup. Different technologies may be applied to detect drinking from the cup. In this embodiment of the invention, the inventor has advantageously selected to detect the presence of lips as decisive argument if the outflow of the fluid has been drunk. Preferably, the drinking sensor is arranged to the opening of the cup for detecting the lips close to the opening when drinking from the cup.

In an embodiment of the cup, the drinking sensor is configured for discriminating between pouring out and drinking from the fluid in the cup. As the sensor is suitable for detecting pouring and drinking, the sensor may be better suitable to monitor the intake by a person.

In an embodiment of the cup, the drinking sensor is configured for discriminating between grabbing the cup and drinking the fluid from the cup. This embodiment provides the advantage of having an additional mode, grabbing, wherein the additional mode in itself is not enough for drinking, thus improving the monitoring of the drinking. Furthermore, analyses may be done based on the amount of times the cup is grabbed whereafter drinking takes place or not. In a preferred embodiment the drinking sensor only detects drinking if the sensor first detects that the cup is grabbed. This embodiment provides the advantage that typically the cup is grabbed or picked up before drinking from the cup takes place. The effect of this advantage is that the electronics of the cup may be held in a low power state, such that energy consumption, especially the average energy consumption, may be minimized.

In an embodiment of the cup, the cup comprises a sidewall having a sidewall edge configured for drinking and marking the envelope of the opening, wherein the drinking sensor is arranged to the sidewall edge for detecting the presence of lips during the outflow. Lips placed on a cup for drinking are typically placed near or on the sidewall edge or rim of the cup. Arranging the sensor close, such as in or on, to this sidewall edge provides the advantage of placing the sensor close to the area where the measurement has to take place. Furthermore, the sensor may be low power as the sensor has to sense over a small distance.

In an embodiment of the cup, the drinking sensor is a capacitive drinking sensor. A capacitive drinking sensor provides the advantage of a low power solution. Furthermore, a capacitive sensor used with a protective layer between the sensor and the lips provides the advantage of prohibiting corrosion and/or damage to the sensor extending the lifetime of the sensor.

In an embodiment of the cup, the capacitive drinking sensor comprises conductive strips, preferably at least three, arranged substantially in line with each other forming a ring on the outside of the cup. If only three strips are used, lips placed on the cup for drinking may be placed such that the lips overlap with two strips. Thus, both strips will detect the presence of lips. A hand grabbing the cup will likely overlap with all three strips. Thus, if three strips detect the presence of an object, this object is most likely not lips, but hands. Hence, this embodiment provides the advantage of a sensor able to distinguish between lips and hands. In a preferred embodiment of the cup, the conductive strips are parallel to the sidewall edge. This embodiment provides the advantage of ease of construction.

Furthermore, if the number of conductive strips forming the ring increases, the number of strips that overlap with lips will always be at least one less compared to grabbing the cup with a hand. For example, if the number of strips is twenty, the maximum number of strips that overlap with lips may be five, while the number of strips that overlap with hands grabbing the cup is ten, then the sensor may easily distinguish between the two events. Thus, the cup having more strips has the advantage of improved detection if drinking takes place.

Furthermore, if the number of conductive strips forming the ring is at least four, the sensor may detect that a non-consecutive number of strips is sensing an object. This is typically the case when grabbing the cup, for example with bend fingers, a finger and a thumb or two hands. Lips touching the cup for drinking typically overlap with a consecutive number of strips.

In an embodiment of the cup, the cup comprises a shield arranged for reducing an influence of the fluid in the cup on the capacitive drinking sensor. The capacitive sensor is typically sensitive to any mass fluctuation in its surroundings. A capacitive sensor may be made less sensitive by applying a shield. In effect, this blocks the electrical field that the capacitive sensor uses for detecting. The fluid in the cup is typically a disturbance or noise source to the capacitive sensor. The presence of the shield provides the advantage that fluid in the cup is not mistaken for lips placed on the cup for drinking.

In an embodiment of the cup, the cup may comprise a handle wherein the drinking sensor comprises a grip sensor, preferably a switch sensor, such as a microswitch sensor, and/or a capacitive gripping sensor, arranged for sensing gripping of the handle and/or cup. The grip sensor may be used advantageously as a prerequisite to detecting drinking from the cup.

In an embodiment of the cup, the drinking sensor comprises an orientation sensor, preferably an acceleration sensor. The orientation sensor may advantageously deduce from the orientation of the cup if drinking from the cup takes place. An acceleration sensor may advantageously detect the acceleration of the cup during that fluid flows from the cup. Typically, the acceleration of the cup is below a predefined value, when drinking from the cup takes place.

In an embodiment of the cup, the cup comprises a processor arranged for performing the steps of:
- receiving a measurement of the orientation sensor;
- calculating a position and/or an angle of the cup from the measurement;
- determining if the outflow of the fluid is drinking from the cup based on the position and/or the angle. The processor allows to track the movement from the cup before and/or during drinking. The processor may therefore advantageously deduce if drinking takes place. As an example, the cup will typically be lifted from a table to lips, therefore if the cup is lifted over a predefined distance, most likely drinking from the cup will take place. Furthermore, the cup is typically slowly rotated, preferably after being lifted, during drinking and more quickly when pouring from the cup. Thus, the rotation of the cup should not exceed a predefined rotation speed.

In an embodiment of the cup, the processor is further arranged for performing the step of:
- establish a trajectory covered by the cup from a plurality of positions and/or angles; and
wherein the determining step is based on the trajectory. The step of establishing a trajectory advantageously enhances the determining step.

In an embodiment of the cup, the processor is further arranged for performing the step of:
- retrieving a sprout setting and/or a straw setting;
wherein if the sprout or the straw setting is set, the determining step is solely based on the position and/or the angle of the cup. A sprout and a straw may change the trajectory of the cup before drinking from the cup. Furthermore, a sprout and a straw may change the orientation of the cup during drinking. Allowing a setting enhances the determining step.

In an embodiment of the cup, the processor is further arranged for discriminating between pouring out and drinking from the fluid in the cup as part of the determining the step. The discriminating step advantageously enhances the determining step as outflow of fluid during pouring is not misinterpreted as fluid intake of the person monitored.

According to another aspect of the invention, a computer program product comprising a computer readable medium having computer readable code embodied therein, the computer readable code being configured such that, on execution by a suitable computer or processor, the computer or processor is caused to perform the method of any of the preceding embodiments.

According to a further aspect of the invention, a drinking cup comprising:
- a wall defining an inner space for holding a fluid having a fluid level;
- an opening for outflow of the fluid from the inner space;
- a first sensor extending from the opening, measuring a fluid level; and
- a second sensor;
wherein the first sensor and the second sensor are arranged for measuring the fluid level.

Hydration of people may be monitored, such as for patients, elderly and babies. Improving the accuracy of hydration monitoring causes less babies and elderly to suffer from dehydration. Improving the accuracy of hydration monitoring causes some type of patients from drinking too much.

It is an insight of the inventor that an issue with the current measurement methods is that the amount of fluid in the cup is unknown. Most of the time an educated guess is made when determining the amount of fluid. This leads to a highly inaccurate amount of fluid drunk from the cup by a person. This inaccuracy may cause dehydration or over hydration of this person, which may even lead to hospitalization. This further aspect of the invention determines the fluid level in the inner space of the cup. This fluid level is used to determine the volume of the fluid in the inner space of the cup. This determining may be done internally, thus comprised in the cup, or externally, thus by an external processor, such as a computer, laptop or server.

The fluid level may be seen as a plane, especially if the cup is stable. The fluid level together with the shape of the inner space of the cup determine the volume of the fluid. It is a further insight of the inventor that although the cup may be stable enough to consider the fluid level as a plane or substantially as a plane, the cup does not need to be held horizontal, upright or level. Thus, if the fluid level is determined based on a single position measurement the fluid level and the resulting fluid volume may be highly inaccurate. As an example, a cup may be filled under a tap, whereafter a person may drink from the cup without that the cup is placed on a horizontal surface, such as a table. In the example, the fluid level and the resulting fluid volume actual and calculated may differ considerably. Hence, this current aspect of the invention provides the technical effect of a cup able to determine the fluid level when the cup is not in the upright position.

The cup according to the current invention determines the fluid level by determining the fluid level with a first sensor and a second sensor. The second sensor may be of different types.

The fluid level, if considered as a plane, may be determined in several ways. A plane in 3D-space is defined by:
- three points in the plane, which are different and cannot be placed on a line;
- a single point in the plane and one line in the plane, wherein the single point is not part of the line;
- two lines in the plane, wherein the lines are different; and
- a single point in the plane and a direction perpendicular to the plane.

A line in 3D-space may be defined by:
- two points on the line, which points are different;
- one point on the line and a direction of the line.

Substituting the line definition for the options 2 and 3 of the plane, results in the fact that always at least one point or location of the plane, which is substantially the fluid level, needs to be known. This at least one point or location is determined by the first sensor.

Depending on a certain embodiment of the invention, the second sensor may comprise:
- two sensors for measuring the fluid level;
- one sensor for measuring the fluid level and one sensor for measuring the gradient of the fluid level in a direction, which is not in the direction defined by the two fluid level position sensors;
- two sensors for measuring the gradient of the fluid level in independent directions; and
- one sensor indicating a direction perpendicular to the plane.

The second sensor may comprise further sensors for measuring location or direction of the fluid level for improving accuracy and/or redundancy of the measurement.

A direction should always be given relative to a reference plane. This reference plane is typically the horizontal plane. Gravity is perpendicular to this plane.

In an embodiment of the cup, at least the first sensor is arranged to the wall, such as on, along and/or in the wall. The first sensor is advantageously arranged to the wall for easing construction of the cup.

In an embodiment of the cup, the second sensor comprises a second fluid level sensor extending from the opening, measuring a fluid level. As the second sensor comprises a fluid level sensor, two measuring points are advantageously obtained from the fluid level. Furthermore, as the first sensor already has to be a fluid level sensor, having the second sensor comprising also an identical fluid level sensor provides the advantage of construction simplicity.

In an embodiment of the cup, the first sensor and the second fluid level sensor are arranged at non-opposing ends of the opening.

In an embodiment of the cup, the second sensor comprises a third fluid level sensor extending from the opening, measuring a fluid level. Three fluid level sensors are one combination of sensors forming the minimum number of sensors to determine the location of the fluid level. In combination with the preceding embodiment, at least two of the three fluid level sensors arranged at non-opposing ends of the opening allows the fluid level to be determined with improved accuracy.

In a further embodiment of the cup, the first sensor, the second fluid level sensor and the third fluid level sensor are arranged at non-opposing ends of the opening. This embodiment allows the fluid level to be determined with improved accuracy. Preferably the fluid level sensors are evenly distributed over the opening of the cup. As the fluid level sensors are distributed over the opening, the three measured locations in the plane of the fluid level form a triangle having angles as large as possible. Having these angles as large as possible have the effect of improved accuracy.

In an embodiment of the cup, at least the first sensor is a capacitive level sensor. A capacitive level sensor provides the advantage of a low power solution. Furthermore, a capacitive level sensor used with a protective layer between the sensor and the fluid provides the advantage of prohibiting corrosion and/or damage to the sensor extending the lifetime of the sensor.

In an embodiment of the cup, the capacitive level sensor comprises conductive strips arranged substantially parallel to each other. Typically, in this embodiment, the conductive strips extend from the opening of the cup downward, preferably in a straight manner. This embodiment provides ease of construction and ease of calculating the location of the fluid level with such a conductive strip.

In an embodiment of the cup, the capacitive level sensor comprises two conductive strips arranged substantially parallel to each other. This embodiment allows the fluid level to be determined with a relatively simple capacitive sensor. Preferably the fluid level sensors are evenly distributed over the opening of the cup. As the fluid level sensors are distributed over the opening, the three measured locations in the plane of the fluid level form a triangle having angles as large as possible. Having these angles as large as possible have the effect of further improving the accuracy.

In an embodiment of the cup, the cup comprises a shield arranged for reducing an influence of a hand gripping the cup and/or lips drinking from the cup on the capacitive level sensor. The capacitive sensor is typically sensitive to any mass fluctuation in its surroundings which cause a change in dielectric for the capacitive sensor. A capacitive sensor may be made less sensitive by applying a shield in that direction. In effect, this blocks the electrical field that the capacitive sensor uses for detecting in the direction of the shield. A hand gripping the cup or lips drinking from the cup are typically a disturbance or noise source to the capacitive sensor. The presence of the shield provides the advantage that a hand gripping the cup or lips drinking from the cup are not mistaken for fluid in the cup.

In an embodiment of the cup, the second sensor comprises an angle measurement sensor for measuring the angle of the cup, preferably with reference to a horizontal plane. A fluid level may slosh causing inaccuracy in the fluid level measurement. The effect of having at least one angle measurement sensor is that the fluid level measurement becomes less sensitive to sloshing, thus improves the accuracy of the fluid level measurement.

In an embodiment of the cup, the second sensor comprises an acceleration sensor for measuring the acceleration and based thereon determining the angle, such as a normal vector, of the cup, preferably with reference to a horizontal plane. Having the acceleration sensor provides the advantage that not only can the sensor be used for determining the fluid level, but also may the sensor be used to study the lifting behaviour of and drinking behaviour from the cup. Further, determining the normal vector of the fluid level has the advantage of providing a minimum of sensors, being one fluid level sensor and one acceleration sensor, for determining the fluid level.

In an embodiment of the cup, the cup comprises a processor arranged for performing the steps of:
- receiving a measurement of the first sensor;
- receiving a measurement of the second sensor;
- calculating the fluid level based on the received measurements;
- retrieving from a memory data defining the shape of the inner space; and
- determining the volume of the fluid in the inner space based on the fluid level and the shape of the inner space. This embodiment provides the advantage of a processor, typically executing software, which is typically flexible in programming or changing the behaviour of executing the steps.

In an embodiment of the cup, the processor is further arranged for performing the steps of:
- storing the volume of the fluid; and
- providing the volume of the fluid to an external device. Storing the fluid volume provides the advantage that the cup is able to transmit the fluid volume later. In a further embodiment, the cup may comprise a transmission unit, preferably wireless, for transmitting preferably multiple fluid levels at the time providing the advantage of saving energy and allowing the cup to go out of radio reach of a base station receiving the fluid levels.

According to another aspect of the invention, a computer program product comprising a computer readable medium having computer readable code embodied therein, the computer readable code being configured such that, on execution by a suitable computer or processor, the computer or processor is caused to perform the method of any of the preceding embodiments.

According to a further aspect of the invention, a drinking cup comprising:
- an inner space having a bottom part, which bottom part has a deepest location, wherein the inner space is arranged for holding a fluid having a fluid level;
- an opening for outflow of the fluid from the inner space; and
- a level sensor extending from the opening towards the deepest location, measuring a fluid level;
wherein when the cup is held in an upright orientation and when the fluid level rises through the bottom part, the bottom part of the inner space is shaped to have an increasing fluid level area.

Hydration of people may be monitored, such as for patients, elderly and babies. Improving the accuracy of hydration monitoring causes less babies and elderly to suffer from dehydration. Improving the accuracy of hydration monitoring causes some type of patients from drinking too much.

It is an insight of the inventor that an issue with the current measurement methods is that the amount of fluid in the cup is inaccurately measured, especially when the fluid level is low.

A deepest location of the cup may be defined by placing the cup in an upright position and when fluid is drawn from the inner space, the last location holding fluid is the deepest location of the cup. The deepest location is thus the lowest location seen from a gravity standpoint of view when the cup is in an upright position. In some cups, having an inner space with a flat or substantially flat bottom surface, the deepest location may be an area.

Level sensors, typically elongated level sensors, measuring a location of the fluid level typically extend to or close to the deepest location. As the level sensor indicates the presence of fluid in contact with or adjacent to the sensor, if the fluid level is low, any minor angle of the cup or drop formation of the fluid may cause considerable inaccuracy of the measured fluid level and the determined fluid volume based on the measured fluid level. This inaccuracy is worsened if the level sensor extends not completely to the deepest location.

The current invention has the feature that when the cup is held in an upright orientation and when the fluid level rises through the bottom part, the bottom part of the inner space is shaped to have an increasing fluid level area. This feature has the effect that drop formation of the fluid in an upright or substantially upright position of the cup is prevented. Furthermore, this feature has the effect that if the cup is slightly off from being substantially upright the fluid is more likely to maintain contact with or to remain adjacent to the level sensor. Furthermore, the level sensor may more easily extend toward the deepest location, preferably ending at the deepest location for improving the fluid level measurement in the bottom part. Thus, the effect of this feature is that the accuracy and reliability of the level sensor is improved.

In an embodiment of the cup, the bottom part has a tapered shape towards the deepest location and/or the deepest location is substantially a spot. This embodiment has the advantage of a shaped bottom part which complies to the condition of having an increasing fluid level area when the fluid level rises.

In an embodiment of the cup, the tapered shape defines a ratio of increase in volume over an increase in area within the range 0.10-0.80, preferably 0.15-0.70, more preferably 0.20-0.50, most preferably 0.25-0.40. A ratio within the range provides the advantage that a change in fluid level provides a considerable change in measurement, while the fluid level is still measurable up to or close to when no fluid is present anymore in the cup.

In an embodiment of the cup, the fluid level sensor is arranged to the wall, such as on, along and/or in the wall. This provides the advantage of ease of construction of the cup. Furthermore, if the fluid level sensor is arranged in the wall with a protective layer between the sensor and the outside provides the advantage of prohibiting corrosion and/or damage to the sensor extending the lifetime of the sensor.

In an embodiment of the cup, the fluid level sensor is a capacitive level sensor. A capacitive drinking sensor provides the advantage of a low power solution. In a further embodiment of the cup, the capacitive level sensor comprises conductive strips arranged substantially parallel to each other. This embodiment provides the advantage of ease of construction.

In an embodiment of the cup, the capacitive level sensor comprises two conductive strips arranged substantially parallel to each other. Typically, in this embodiment, the conductive strips extend from the opening of the cup downward, preferably in a straight manner. This embodiment provides ease of construction and ease of calculating the location of the fluid level with such a conductive strip. Thus, this embodiment allows the fluid level to be determined in a simple way. Preferably, the fluid level sensors are evenly distributed over the opening of the cup. As the fluid level sensors are distributed over the opening, the three measured locations in the plane of the fluid level form a triangle having angles as large as possible. Having these angles as large as possible have the effect of further improving the accuracy.

In an embodiment of the cup, the cup comprises a bottom surface substantially planar and having an angle in the range 10°-80°, preferably 20°-70°, more preferably 30°-60°, most preferably 40°-50°. This embodiment is typically a further detailing of the tapered shape of the preceding embodiment providing the same advantages. Furthermore, the substantially planar bottom surface provides the advantage of simplifying the calculation of the fluid volume.

According to a further aspect of the invention, a method for a processor of a drinking cup comprising the steps of:
- receiving measurements from a motion detector;
- if the motion detector detects motion, detecting drinking from the cup by a user by a capacitive drinking sensor comprising conductive strips arranged substantially in line with each other forming a ring on the outside of the cup and being arranged to an opening for detecting the presence of lips during the outflow;
- after detecting determining a current volume of a fluid held in the cup;
- retrieving a previous volume from a storage;
- subtracting for determining a changed volume based on the current volume minus the previous volume;
- accrediting the changed volume to a drunk volume;
- comparing the drunk volume to a first set value providing a first comparison, wherein the first set value is a limit defining an edge of a range;
- comparing the drunk volume with a second set value providing a second comparison, wherein the second set value is within a range limited by the first set value; and
- signalling of the first and second comparison.

Hydration of people may be monitored, such as for patients, elderly and babies. Improving the accuracy of hydration monitoring causes less babies and elderly to suffer from dehydration. Also, improving the accuracy of hydration monitoring prohibits some type of patients from drinking too much.

It is an insight of the inventor that an issue with the current measurement methods is that the amount of fluid drunk from the cup is not provided as feedback. The absence of the feedback may cause an imbalance in hydration, such as dehydration. This imbalance may even lead to hospitalization.

The method according to the current aspect of the invention provides a signalling of the intake of fluid from the cup. This signalling may advantageously be provided directly to the user of the drinking cup to stimulate this user to improve his or her hydration balance. Alternatively, this signalling may advantageously be provided to a care provider, such as a nurse, assistance personnel or caregiver, using for example a separate monitoring system. The care provider may then stimulate the user to drink more or less fluid from the cup. The effect of the signalling is that the hydration balance of the user is more effectively monitored and even controlled or maintained.

Furthermore, as the signalling comprises signalling the first and second comparison, the effectiveness of the monitoring may be enhanced to also signal if a user is close to the limit of unhealthy hydration. The simplicity of the signalling due to that states of hydration, such as only 3 states of hydration, may be signalled, instead of a value, provides a further advantage.

In an embodiment of the method for the cup, the first and/or second set value is depending on:
- the type of the user drinking from the cup;
- the age of the user;
- the drinking history of the user; and/or
- the disease of the user. This embodiment provides the benefit of personalizing the behaviour of the cup to specific needs of a patient to be monitored.

In an embodiment of the method for the cup, the signalling step combines the first and second comparison in one signal providing the advantage of simplifying the implementation of the method.

In an embodiment of the method for the cup, the signalling of the comparison is to the user. It is an insight of the inventor that feedback, preferably a direct feedback in time, to the user may encourage the correct drinking behaviour of the user. Signalling of the comparison to the user is such an advantageous feedback to the user, causing an improved drinking behaviour of the user.

In an embodiment of the method for the cup, the signalling comprises visual signalling and/or tactile signalling. Preferably, the signalling is done to the user directly. This embodiment provides the advantage of expressing the signalling comprehensible to humans, such as to users.

In an embodiment of the method for the cup,
the visual signalling comprises the step of signalling a drunk volume over the limit with a red light;
the visual signalling comprises the step of signalling a drunk volume within the range, but over the second set value with an orange light; and
the visual signalling otherwise comprises the step of signalling a drunk volume with a green light. This embodiment has the advantage of using colours encouraging drinking behaviour, wherein the colours are naturally associated. For example, an incorrect drinking behaviour is associated with red, a drinking behaviour close to incorrect is associated with orange and a good drinking behaviour is associated with green.

In an embodiment of the method for the cup, the set value and the drunk volume are compared over time. Typically, the drunk volume should not be consumed at once, but over a period of time. This embodiment provides the advantage of tracking such drinking behaviour over time. In a further embodiment, the comparison is with a set value which is increasing, such as linearly, over time to an end value, such that the user is stimulated to drink spread out over time.

According to another aspect of the invention, a drinking cup comprising:
- an opening for outflow of a fluid held in the cup;
- a motion detector for detecting motion of the cup;
- a drinking sensor for detecting drinking of the outflow of the fluid;
- a volume storage for storing a previous volume;
- a set value storage for storing a set value;
- a indicator for signalling the comparison; and
- a processor arranged for performing the steps of any of the preceding methods.

In an embodiment of the cup, the motion detector comprises an acceleration sensor. An acceleration sensor may advantageously detect the acceleration of the cup during that fluid flows from the cup. Typically, the acceleration of the cup is below a predefined value, when drinking from the cup takes place. Furthermore, the acceleration sensor may be used to determine the trajectory of the cup when lifted or tilted for determining if drinking from the cup takes place. Typically, the acceleration measurements are integrated twice over time to get to the various positions in 3D space of the cup and its orientation. Furthermore, the acceleration sensor may be used to keep the electronics of the cup in a low power state while the cup is not experiencing acceleration. As a result, the acceleration sensor may be used to minimize the average power consumption of the cup.

In an embodiment of the cup, the motion detector comprises a microswitch arranged for sensing contact of the cup with a resting surface. A microswitch simplifies the implementation. In an embodiment of the cup, the drinking sensor comprises a weight sensor for sensing the weight of the cup. A weight sensor may simplify the implementation. Furthermore, the weight sensor may advantageously be used to directly determine the fluid volume in the cup without measuring the fluid level and determining the amount of fluid in the cup indirectly. The weight sensor combined with measuring the fluid level may be used by a learning algorithm for learning the shape of the inner space.

According to another aspect of the invention, a computer program product comprising a computer readable medium having computer readable code embodied therein, the computer readable code being configured such that, on execution by a suitable computer or processor, the computer or processor is caused to perform the method of any of the preceding embodiments.

Combinations of the different sets of embodiments are envisioned by the inventor to provide a combined technical effect enhancing the accuracy, monitoring, controlling or maintaining of the hydration of the person drinking the fluid from the cup. These combinations are elucidated by the figures.

### BRIEF DESCRIPTION OF THE DRAWINGS

The invention will be apparent from and elucidated further with reference to the embodiments described by way of example in the following description and with reference to the accompanying drawings, in which:
Figure 1 schematically shows a perspective view of a cup according to an embodiment of the current invention;
Figure 2 schematically shows a side view of a cup according to an embodiment of the current invention;
Figure 3 schematically shows a side view of a wireframe of the cup according to an embodiment of the current invention;
Figure 4 schematically shows a top view of a wireframe of the cup according to an embodiment of the current invention;
Figure 5 schematically shows a perspective view of a wireframe of the cup according to an embodiment of the current invention;
Figure 6A schematically shows a side view of a cup according to an embodiment of the current invention;
Figure 6B schematically shows a cross-section of a cup according to an embodiment of the current invention shown in figure 6A;
Figure 7A schematically shows a side view of a cup according to an embodiment of the current invention;
Figure 7B schematically shows a cross-section of a cup according to an embodiment of the current invention shown in figure 7A;
Figure 8 schematically shows an enlargement of a part of a cup according to an embodiment of the current invention shown in figure 7B;
Figure 9 shows a side view of an embodiment of an internal assembly of a cup according to an embodiment of the current invention, wherein the outside shell is removed;
Figure 10 shows a top view of an embodiment of a cup according to an embodiment of the current invention;
Figure 11 shows a perspective view of an embodiment of an internal assembly 101' of a cup according to the current invention, wherein the outside shell is removed;
Figure 12A schematically shows a side view of a cup according to an embodiment of the current invention;
Figure 12B schematically shows a cross-section of a cup according to an embodiment of the current invention shown in figure 12A;
Figure 13 schematically shows a method for a cup according to the current invention; and
Figure 14 schematically shows an embodiment of a computer program product, computer readable medium and/or non-transitory computer readable storage medium according to the invention.

The figures are purely diagrammatic and not drawn to scale. In the figures, elements which correspond to elements already described may have the same reference numerals.

**LIST OF REFERENCE NUMERALS**

| | |
|---|---|
| 10 | fluid |
| 15 | fluid level |
| 100 | cup |
| 101, 101' | Internal assembly without outer shell of cup 100 |
| 110 | opening |
| 120 | drinking sensor |
| 125 | capacitive drinking sensor |
| 126, 126', 126" | conductive strips of capacitive drinking sensor |
| 130 | sidewall |
| 131 | inner space |
| 132 | bottom part |
| 133, 133' | deepest location |
| 135 | sidewall edge |
| 136 | bottom plane |
| 137 | curved bottom surface |
| 140 | shield |
| 150 | orientation sensor |
| 151 | angle measurement sensor |
| 152 | acceleration sensor |
| 153 | motion detector |
| 154 | weight sensor |
| 160 | processor |
| 170 | first sensor |
| 171 | first capacitive level sensor |
| 172, 172' | conductive strip of first capacitive level sensor |
| 180 | second sensor |
| 181 | second capacitive level sensor |
| 182, 182' | conductive strip of second capacitive level sensor |
| 190 | indicator |
| 200 | method for a cup |
| 210 | receive measurement |
| 220 | drinking detected? |
| 230 | detect current volume |
| 240 | retrieve previous volume |
| 250 | determine changed volume |
| 260 | accrediting changed volume |
| 270 | compare drunk volume with 1-st set value |
| 280 | compare drunk volume with 2-nd set value |
| 290 | signal comparison |
| 1000 | computer program product |
| 1010 | computer readable medium |
| 1020 | computer readable code |
| α | angle tapered shape |
| β | angle bottom surface |

### DETAILED DESCRIPTION OF EXEMPLARY EMBODIMENTS

The following figures may detail different embodiments. Embodiments can be combined to reach an enhanced or improved technical effect. These combined embodiments may be mentioned explicitly throughout the text, may be hint upon in the text or may be implicit.

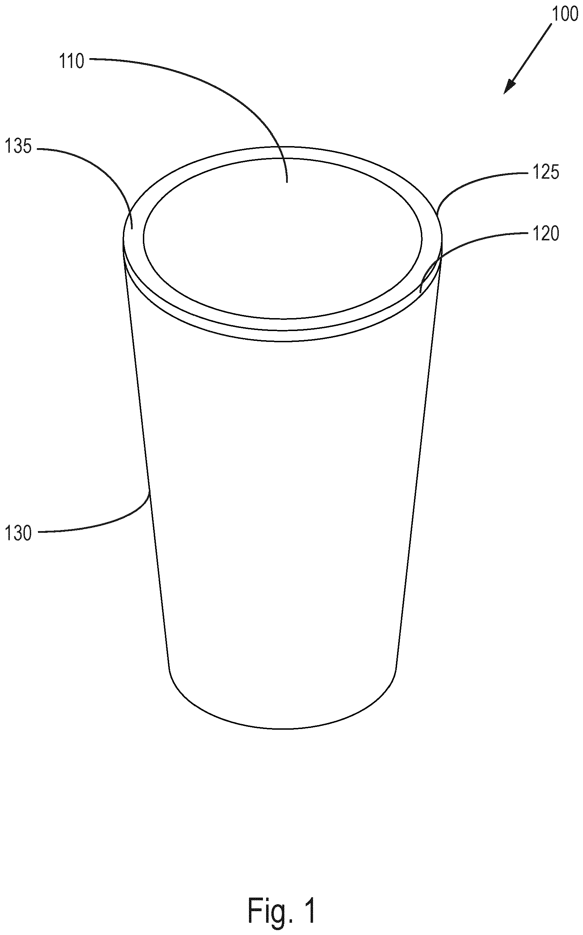

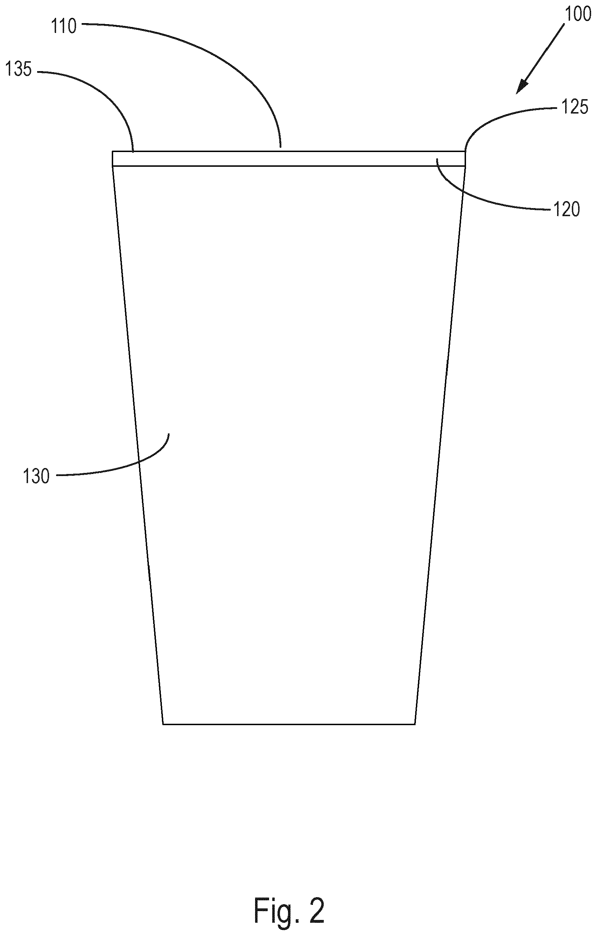

Figure 1 schematically shows a perspective view of a cup 100 according to an embodiment of the current invention. Figure 2 shows a side view of the same cup. The cup comprises a sidewall 130 having a sidewall edge 135. The sidewall edge forms the periphery of an opening 110. A drinking sensor 120, preferably a capacitive drinking sensor, is arranged to the sidewall edge, such that lips drinking from the cup via the opening are easily detected. The arrangement of the drinking sensor is preferably spaced by a small distance from the sidewall edge and/or running parallel to the sidewall edge. The arrangement of the drinking sensor may also be overlapping with the sidewall edge.

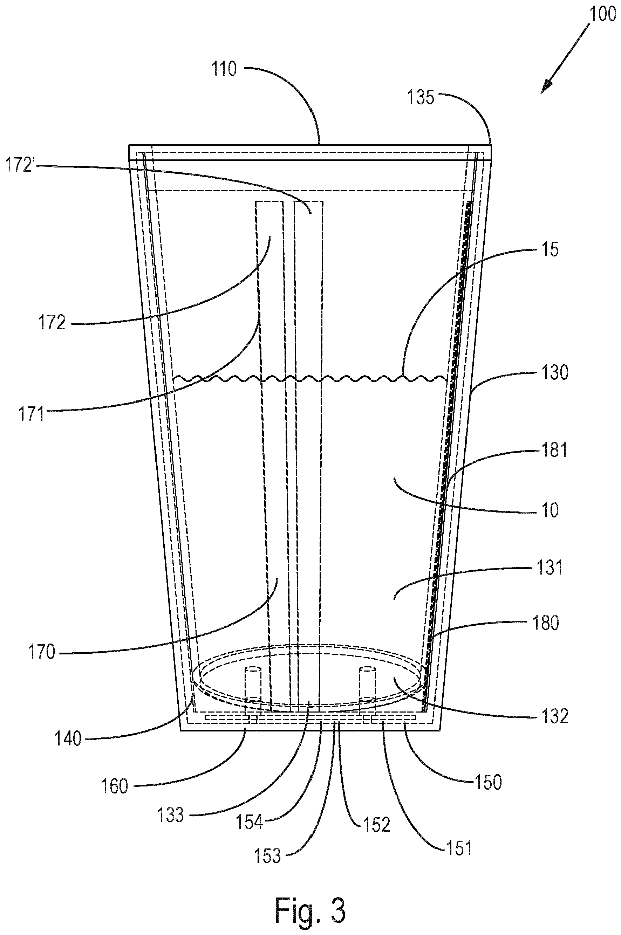

Figure 3 schematically shows a side view of a wireframe of the cup 100 according to an embodiment of the current invention. The sidewall is shaped to form an inner space 131. The cup may further comprise a bottom part 132 having a deepest location 133. The deepest location in this particular embodiment is a single location.

The cup may hold a fluid 10 having a fluid level 15 in its inner space. The cup may further comprise a first sensor 170 for measuring the fluid level. The first sensor is preferably a capacitive level sensor 171.

A capacitive sensor may comprise one conductive strip. This type of capacitive sensor is more suitable for detecting the presence of objects, such as lips or hands. A capacitive sensor may also comprise two conductive strips for measuring a dielectric change between these two strips. This type of capacitive sensor is more suitable for accurate measurements, such as measuring the presence of fluid between the two conductive strips. A changing fluid level will cause a change in dielectric between the two conductive strips, which can be detected by the capacitive sensor.

The cup may further comprise a second sensor 180 for measuring the fluid level. The second sensor may preferably comprise a second capacitive level sensor 181.

The cup may further comprise a motion detector 153. The fluid level measurement is preferably done when no motion is detected. Thus, the motion sensor may be used to switch off the level measurement when motion is detected. Furthermore, based on the motion a trajectory may be compiled that the cup travels from a stationary position. This trajectory may help to differentiate between for example the mouth of a person drinking from the cup and emptying the cup in a sink. The motion detector may comprise an acceleration sensor 152. By integrating the accelerations over time, a trajectory of the cup may be compiled.

For example, if the cup is lifted to a considerable height compared to its stationary position and then gently tilted, this is a typical trajectory that the cup may describe when a user drinks from the cup. If the cup is lifted, but ends below the stationary position and is then rapidly tilted, this is a typical trajectory that the cup may describe when a user disposes himself from the content of the cup.

Also, the combination of the last measured volume with the trajectory may indicate drinking of the fluid in the cup. For example, if the measured volume is indicating a filled cup, the trajectory should indicate a gentle tilt of the cup up to the point where the fluid reaches the opening, whereafter the tilting may continue more slowly while the user is drinking from the cup.

The cup may comprise an angle measurement sensor 151, which may be part of the motion sensor. An angle measurement sensor may detect changes in the angle indication an orientation change of the cup or at least a movement of the cup. The cup may comprise an orientation 150 sensor for measuring the orientation of the cup. The orientation sensor may be used to detect movement of the cup and/or how the fluid pours out of the cup, thereby distinguishing between drinking and discarding the fluid in the cup.

The cup may comprise a shield 140. As the cup may comprise capacitive sensors, these sensors use changes in their electrical field to detect the presence of objects. The object to be detected needs to have a different dielectric constant compared to the currently present substance next to the capacitive sensor. This currently present substance may be air, the fluid or any other material. If, for example, the air on the outside of the cup is replaced by some lips, the capacitive drinking sensor may detect the presence of an object, which are the lips in this case.

Typically, the electric field of the capacitive drinking sensor does extend not only to the exterior of the cup, but also to the interior of the cup. If then the cup is held oblique or filled to the opening with fluid, the capacitive sensor may detect the presence of a fluid in the inner space of the cup and may mistake the change of dielectric constant in the inner space as lips placed on the cup for drinking. To prevent this misreading of the capacitive drinking sensor, the electric field extending into the interior of the cup is blocked by a shield. This shield may be a metal sheet or wire mesh, which is fine-meshed such that the electrical field is blocked.

The same may hold for the capacitive level sensors. These capacitive level sensors should only measure the presence of fluid in the inner space of the cup. Typically, the electrical field of the capacitive level sensor extends not only into the interior of the cup, but also to the exterior of the cup. For example, a hand grabbing the cup or lips placed on the cup may influence the fluid level detected by the capacitive level sensor. To prevent misreading of the capacitive level sensor, the electric field extending to the exterior of the cup is blocked by a shield. Preferably, the shield for the capacitive level sensor and the capacitive drinking sensor are the same. The shield, as it should be placed between the capacitive level sensor and the capacitive drinking sensor, is typically integrated in the sidewall of the cup.

The cup may comprise a processor 160 for processing all the sensor and detector information. Furthermore, the cup may comprise communication means, such as wireless communication means. The processor may be connected to these communication means for providing the drinking information, the volume in the cup and changes of this volume and/or other sensor measurements, such as trajectory information, to an external database for further analyses and/or visualisation. The information in the external database may provide for means for doctors, nurses, caregivers, medical staff and/or nursing staff to remotely monitor the drinking behaviour of the user drinking from the cup and especially the amount of intake of fluid from the cup by a user. Providing the external database with information has the advantage of improving the monitoring capabilities of doctors, nurses, caregivers, medical staff and/or nursing staff.

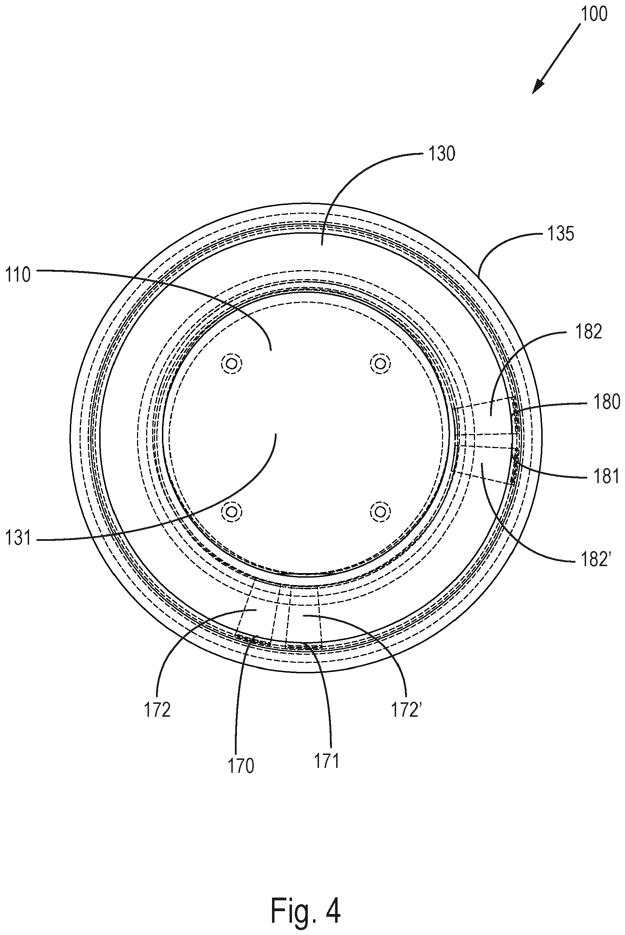

Figure 4 schematically shows a top view of a wireframe of the cup according to an embodiment of the current invention.

The cup comprises a first sensor 170 for detecting the presence of a fluid in the cup. The first sensor is typically a first capacitive level sensor 171 comprising one or more conductive strips 172, 172'.

The cup may further comprise a second sensor 180 for detecting the presence of a fluid in the cup. The second sensor is typically a second capacitive level sensor 181 comprising one or more conductive strips 182, 182'.

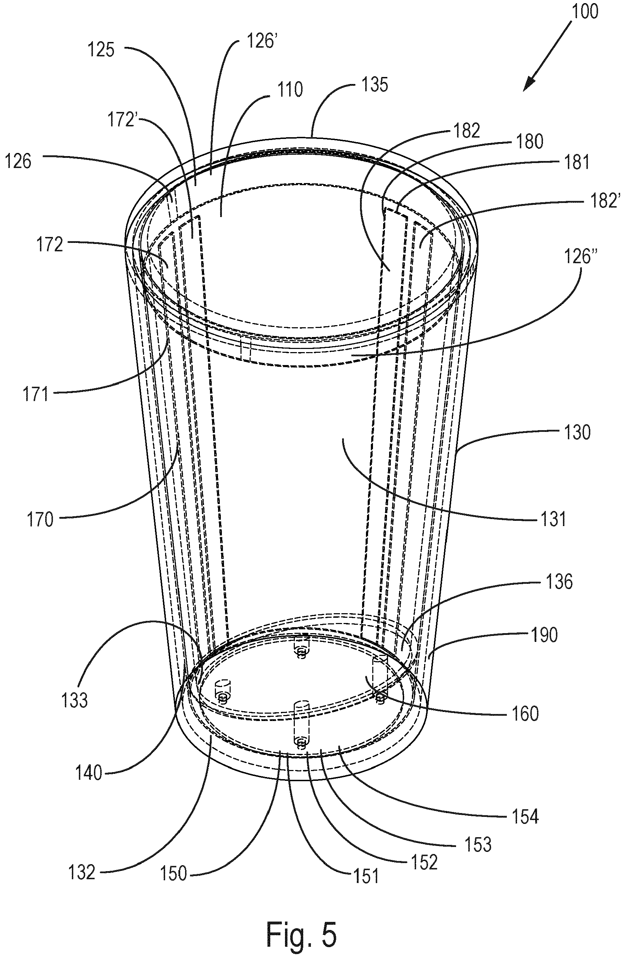

Figure 5 schematically shows a perspective view of a wireframe of the cup according to an embodiment of the current invention. The cup may comprise an indicator 190 for indicating if the comparison of the drunk volume with some set value. The indicator may advantageously be seen as summarizing the drinking behaviour of the user drinking from the cup. As the comparison is with a set value, typically set according to the needs of the user, the indicator provides the advantage of a simple to interpret indication to the user or a person monitoring the fluid intake of the user if the current intake of fluid is inside or outside a given range. The indicator may use tactile means, such as vibrating means. The indicator may use visual means, such as coloured LEDs.

The cup may comprise a weight sensor 154. The weight sensor may be used to determine the volume in the cup as an alternative to the use of fluid level sensors. The combination of the fluid level sensors with the weight sensor may be used to calibrate the tare weight, the weight of the cup. Thereafter, the weight sensor may be used for not only measuring the volume change in the cup, but also the absolute volume in the inner space of the cup. Also, the combination of two-level sensors measuring the fluid level and one weight sensor are adequate for determining the orientation of the fluid level and the orientation of the cup.

Further figure 5 shows the capacitive drinking sensor 125. The capacitive drinking sensor of the cup may comprise conductive strips 126, 126', 126" arranged substantially in line with each other forming a ring on the outside of the cup. The conductive strips are spaced from each other by small gaps isolating one conductive strip from the other. Although one or two conductive strips may already provide the advantage of detecting drinking, the minimum number of conductive strips is three to attain the effect of improved distinguishing between grasping the cup and placing lips on the cup for drinking as described, preferably more than three conductive strips form the ring.

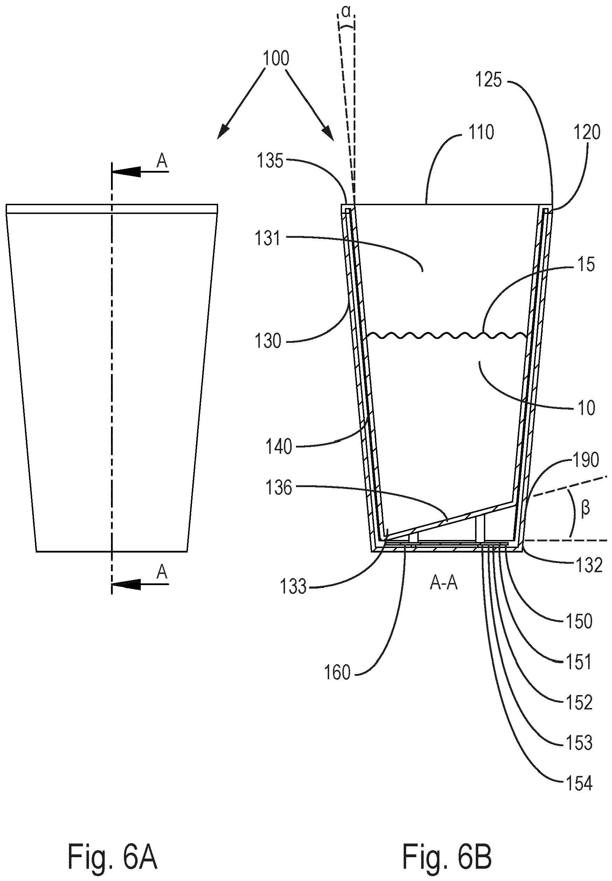

Figure 6B schematically shows a cross-section of a cup according to an embodiment of the current invention. The plane A-A in figure 6A indicates a plane for the cross-sections in figure 6B with a viewing direction in the direction of the arrows.

The cup may comprise a tapered shape as shown in figure 6B. When the cup is placed in an upright position, the side walls make an angle α with the perpendicular providing the tapered shape to the cup. The tapered shape of the cup advantageously provides the cup with an improved gripping. The cup may comprise a bottom plane 136 together with the side wall providing a deepest location 133 to the cup. The bottom plane and the bottom of the cup make an angle β. The combination of the side walls together with the bottom plane provide the cup with a deepest location.

Furthermore, the cup may comprise an indicator 190, which is arranged in this embodiment to a sidewall of the cup. This may be advantageous to a nurse or a patient for viewing the current hydration status of the patient while the cup is placed on a table.

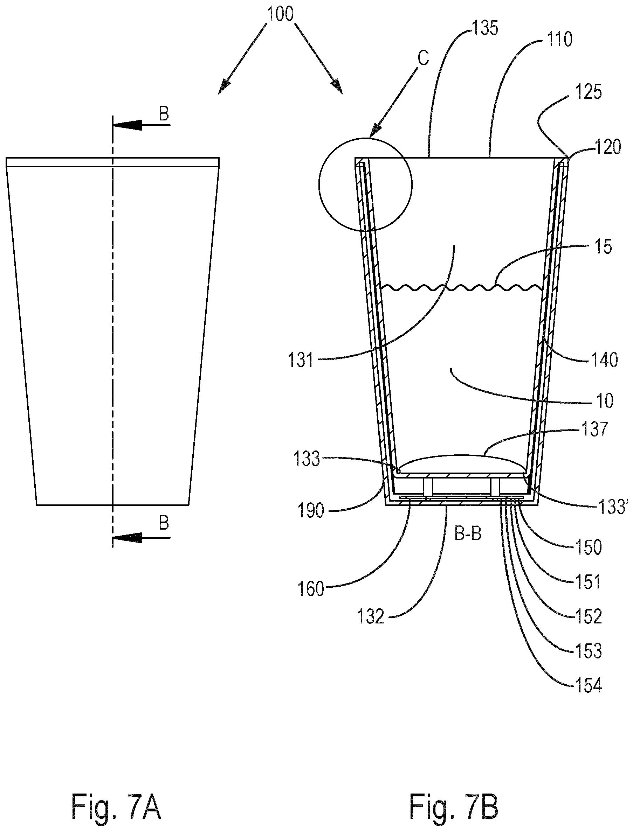

Figure 7B schematically shows a cross-section of a cup according to an embodiment of the current invention. The plane B-B in figure 7A indicates a plane for the cross-sections in figure 7B with a viewing direction along the arrows.

The cup may comprise a tapered shape as shown in figure 6. The cup may comprise a curved bottom surface 137 together with the side wall providing a deepest location 133, 133' to the cup in the form of a ring. As the area of the deepest location is substantially smaller than the area of the fluid level, with an upright cup, the advantage of an improved measurement accuracy as argued in this text, especially for small volumes, is attained.

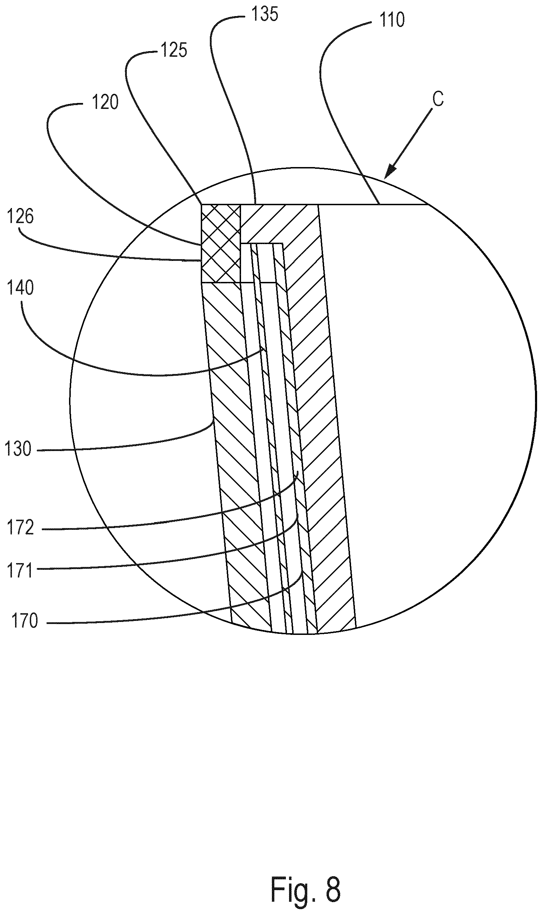

Figure 8 schematically shows an enlargement C of a part of a cup 100 according to an embodiment of the current invention shown in figure 7B. The enlargement shows the sidewall 130 having a sidewall edge 135 defining an opening 110 of the cup. At the sidewall edge the drinking sensor 120, which is typically a capacitive drinking sensor 125 is arranged. The drinking sensor is typically arranged on the outside of the sidewall for detecting drinking from the cup by detecting the presence of lips in contact with the cup. A capacitive drinking sensor comprises one or more conductive strips 126 arranged to the sidewall edge and thus the opening.

The cup further comprises a first sensor 170 for detecting the presence of a fluid in the cup. The first sensor is typically a first capacitive level sensor 171 comprising one or more conductive strips 172. And although an additional cover layer over the first sensor is shown in the figure, a preferred embodiment of the cup comprises a thin, preferably a vary thin layer of material, which material does have no or a minimum of influence on the measurement of the first sensor. The cover layer provides the advantage of covering the first sensor, such that the lifetime of the first sensor and thus the cup is prolonged. Furthermore, in a preferred embodiment, the first sensor has no cover layer, thus the first sensor may then be in contact with a fluid held in the cup.

The cup further comprises a shield 140. The shield may have the function of shielding the drinking sensor from any influence of the fluid in the cup. Therefore, the shield has to be arranged between or substantially between a fluid in the cup and the drinking sensor. The shield may have the function of shielding the first sensor or any other sensor involved in determining the level of the fluid in the cup from any influence of lips in contact with the cup or hands grasping the cup. Therefore, the shield has to be arranged between or substantially between the outside of the cup and the first sensor. Preferably, the shield combines both functions.

A typical implementation of the cup has therefore at least three layers. From the outside to the inside, the layers are: a layer holding the drinking sensor, a layer holding the shield and a layer holding at least the first sensor.

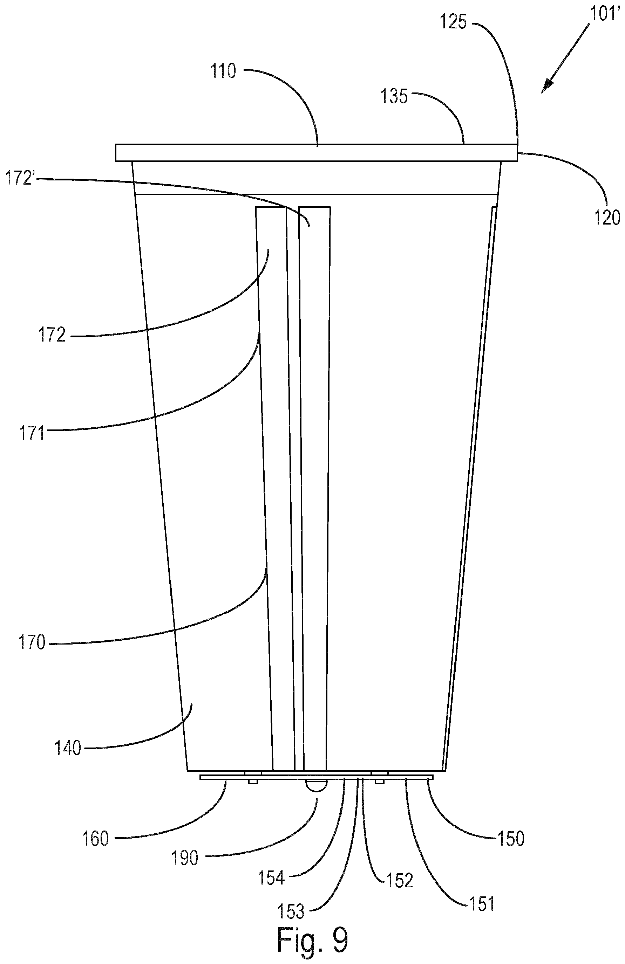

Figure 9 shows a side view of an embodiment of an internal assembly 101' of a cup 100 according to an embodiment of the current invention. The outside shell or cover of the cup is removed. The figure shows the drinking sensor 125 arranged to the opening 110 for detecting drinking. Furthermore, the indicator 190 is arranged to the bottom of the cup. This may be advantageous to a nurse for viewing the current hydration status of a patient while drinking. The indicator may also be arranged to a sidewall for allowing the hydration status to be viewed during that the cup is placed on a surface, such as a table.

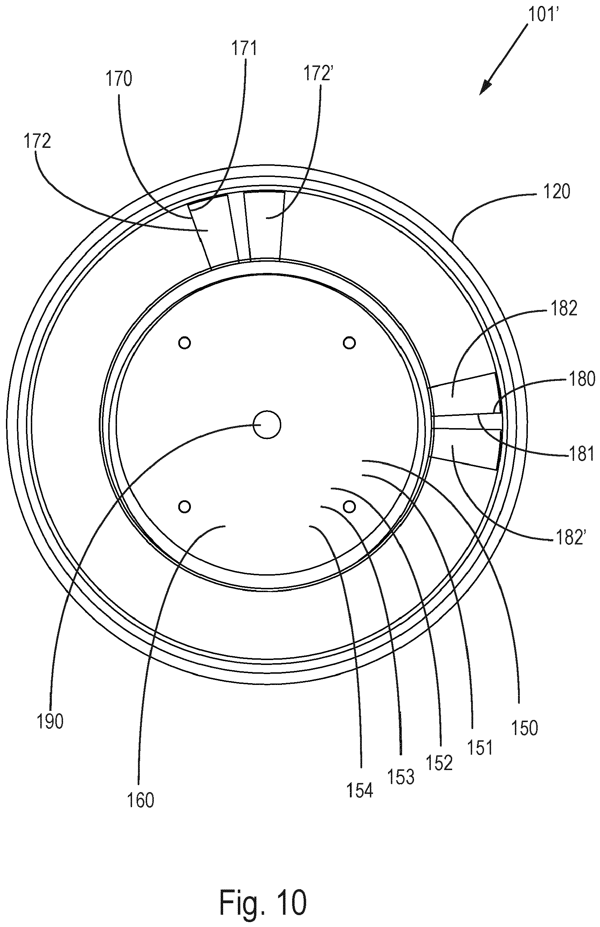

Figure 10 shows a top view of an embodiment of a cup according to an embodiment of the current invention.

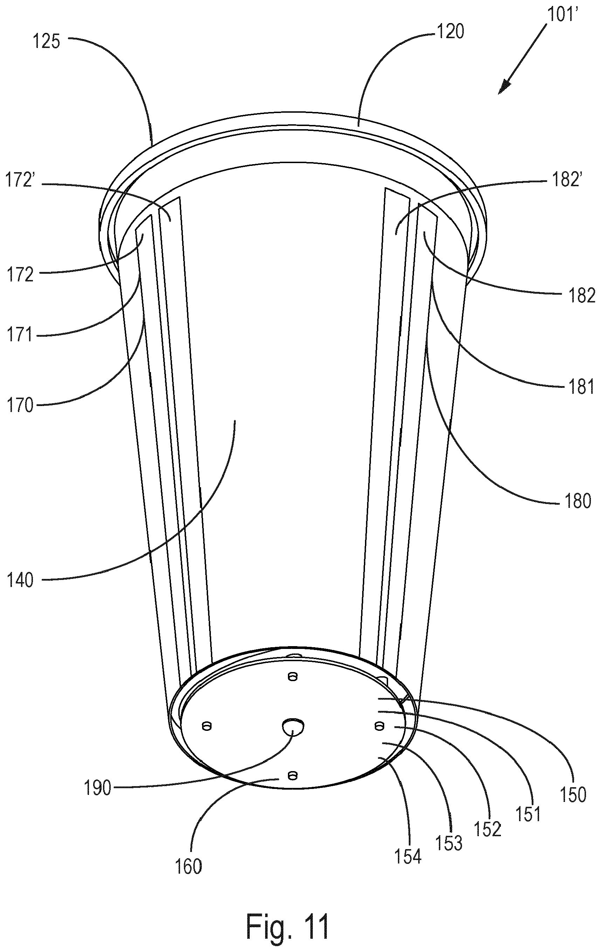

Figure 11 shows a perspective view of an embodiment of an internal assembly 101' of a cup according to the current invention.

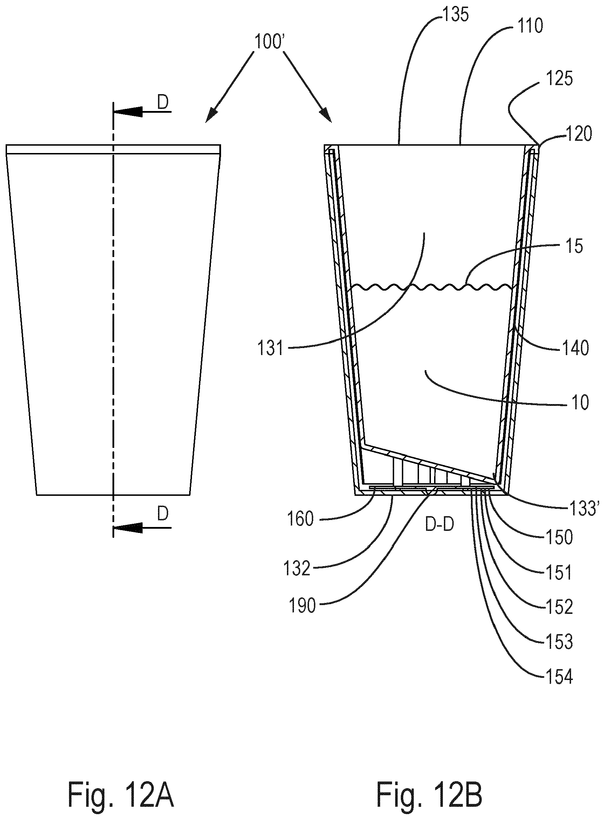

Figure 12B schematically shows a cross-section of a cup according to an embodiment of the current invention. The plane D-D in figure 12A indicates a plane for the cross-sections in figure 12B with a viewing direction in the direction of the arrows.

Figures 12A and 12B have a lot in common with the figures 6A and 6B respectively. One of the differences is that the optional indicator 190 is arranged to the bottom of the cup. This may be advantageous to a nurse for viewing the current hydration status of a patient while drinking.

A fluid in the context of this text may also be a liquid, such as water, coffee, thee, juice, typically liquids that people drink to stay hydrated. The liquid may also be a liquid holding gas, such as carbon dioxide, such as a soft drink.

A sprout in the context of this text is a part of the drinking cup that narrows the opening such that a user drinking from the cup may fold his lips around an opening of the sprout. A user folding his lips around a sprout of a drinking cup may therefore hold the cup upside down without spilling the fluid as the fluid can only remain in the inner space of the cup or in the mouth of the user drinking from the cup. The sprout may be an integral part of the cup or a detachable part of the cup. A straw in the context of this text is a straw for drinking from a cup.

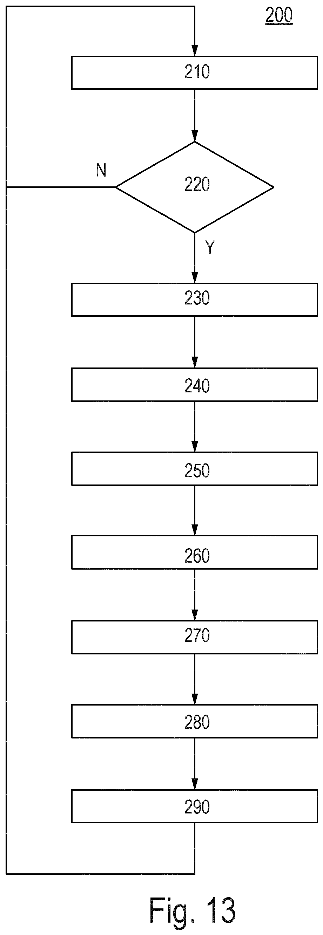

Figure 13 schematically shows a method 200 for a cup according to the current invention. Typically, the method is partly or completely implemented in software and run on a processor.

The method comprises the step of receiving measurements 210 from a motion detector. Typically, as long as no measurements from the motion detector are received, the cup is kept in a low power mode for advantageously preserving energy.

Based on one or more received measurements the processor may start detecting 220 if a user is drinking from the cup. If the processor detects no drinking from the cup, the cup returns to receiving measurements.

If the processor detects drinking from the cup, the method continuous with the step of detecting 230 a current volume of a fluid held in the cup. The current volume may be determined by the several sensors present in the cup and the method of determining the volume as detailed throughout this text.

The method may continue with the step of retrieving 240 a previous volume from a storage. This step may be preformed in parallel or prior to the step of detecting 230.

The method continues with the step of determining 250 the changed volume. The changed volume is the previous volume minus the current volume. The changed volume may be determined after the drinking has stopped. Alternatively, the changed volume may be determined during drinking, effectively determining multiple smaller changed volumes after each other.

The method continues with the step of accrediting 260 the changed volume to a drunk volume. The drunk volume is typically drunk by the same user. Under this assumption, the drunk volume may be used to determine the hydration of the user. The credibility of this assumption may be increased by taking measures such as recognizing a specific user. A specific user may be recognized by the way drinking takes places from the cup. Furthermore, the trajectory of the cup from a stable platform, such as a table, towards the mouth may be specific to a user. Furthermore, the tremor of a user may be detected for identifying a specific user. Other methods of detection are envisioned by the inventor.

The method continues with the step of comparing 270 the drunk volume with a first set value. The first set value is a limit defining an edge of a range. the method continues with the step of comparing 280 the drunk volume with a second set value. The second set value is within a range limited by the first set value. The comparing steps may be swapped in order or done in parallel.

The method continues with the step of signalling 290 of the first and second comparison. The signalling is typically done with a visual indicator, such as one or more LEDs. The range may be subdivided. A drunk volume smaller than the second set value indicating a dehydration issue of the user, typically indicated with a red LED. A drunk volume between the first and second set value indicating a possible dehydration issue of the user, typically indicated with an orange LED. A drunk volume larger than the first set value indicating no dehydration issue of the user, typically indicated with a green LED. In an alternative embodiment, the visual indication is one LED able to provide green, orange and red light.

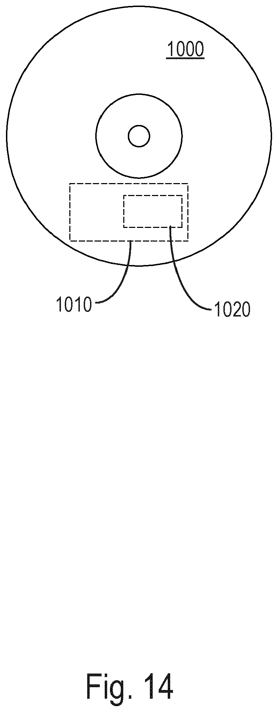

Figure 14 schematically shows an embodiment of a computer program product 1000, computer readable medium and/or non-transitory computer readable storage medium according to the invention.

It should be noted that the figures are purely diagrammatic and not drawn to scale. In the figures, elements which correspond to elements already described may have the same reference numerals.

It will be appreciated that the invention also applies to computer programs, particularly computer programs on or in a carrier, adapted to put the invention into practice. The program may be in the form of a source code, an object code, a code intermediate source and an object code such as in a partially compiled form, or in any other form suitable for use in the implementation of the method according to the invention. It will also be appreciated that such a program may have many different architectural designs. For example, a program code implementing the functionality of the method or system according to the invention may be sub-divided into one or more sub-routines. Many different ways of distributing the functionality among these sub-routines will be apparent to the skilled person. The sub-routines may be stored together in one executable file to form a self-contained program. Such an executable file may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at run-time. The main program contains at least one call to at least one of the sub-routines. The sub-routines may also comprise function calls to each other. An embodiment relating to a computer program product comprises computer-executable instructions corresponding to each processing stage of at least one of the methods set forth herein. These instructions may be sub-divided into sub-routines and/or stored in one or more files that may be linked statically or dynamically. Another embodiment relating to a computer program product comprises computer-executable instructions corresponding to each means of at least one of the systems and/or products set forth herein. These instructions may be sub-divided into sub-routines and/or stored in one or more files that may be linked statically or dynamically.

The carrier of a computer program may be any entity or device capable of carrying the program. For example, the carrier may include a data storage, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

Examples, embodiments or optional features, whether indicated as nonlimiting or not, are not to be understood as limiting the invention as claimed.

### Embodiments II:

1. Drinking cup (100) comprising:
   - an opening (110) for outflow of a fluid (10) held in the cup; and
   - a drinking sensor (120) for detecting drinking of the outflow of the fluid.
2. Cup according to the preceding embodiment, wherein the drinking sensor is arranged to the opening for detecting drinking of the outflow of the fluid.
3. Cup according to any of the embodiments 1-2, wherein the drinking sensor is configured for discriminating between pouring out and drinking from the fluid in the cup.
4. Cup according to any of the embodiments 1-3, wherein the drinking sensor is configured for discriminating between grabbing the cup and drinking the fluid from the cup.
5. Cup according to any of the embodiments 1-4, comprising a sidewall (130) having a sidewall edge (135) configured for drinking and marking the envelope of the opening, wherein the drinking sensor is arranged to the sidewall edge for detecting the presence of lips during the outflow.
6. Cup according to any of the embodiments 1-5, wherein the drinking sensor is a capacitive drinking sensor (125).
7. Cup according to the preceding embodiment, wherein the capacitive drinking sensor comprises conductive strips (126, 126', 126"), preferably at least three, arranged substantially in line with each other forming a ring on the outside of the cup and/or, when at least depending on embodiment 5, parallel to the sidewall edge.
8. Cup according to the preceding embodiment, comprising a shield (140) arranged for reducing an influence of the fluid in the cup on the capacitive drinking sensor.
9. Cup according to any of the embodiments 1-8, comprising a handle wherein the drinking sensor comprises a grip sensor, preferably a switch sensor, such as a microswitch sensor, and/or a capacitive gripping sensor, arranged for sensing gripping of the handle.
10. Cup according to any of the embodiments 1-9, wherein the drinking sensor comprises an orientation sensor (150), preferably an acceleration sensor (152).
11. Cup according to the preceding embodiment, comprising a processor (160) arranged for performing the steps of:
   - receiving a measurement of the orientation sensor;
   - calculating a position and/or an angle of the cup from the measurement;
   - determining if the outflow of the fluid is drinking from the cup based on the position and/or the angle.
12. Cup according to the preceding embodiment, wherein the processor is further arranged for performing the step of:
   - establish a trajectory covered by the cup from a plurality of positions and/or angles; and
   wherein the determining step is based on the trajectory.
13. Cup according to the preceding embodiment, wherein the processor is further arranged for performing the step of:
   - retrieving a sprout setting and/or a straw setting;
   wherein if the sprout or the straw setting is set, the determining step is solely based on the position and/or the angle of the cup.
14. Cup according to any of the embodiments 11-13, wherein the processor is further arranged for discriminating between pouring out and drinking from the fluid in the cup as part of the determining the step.
15. Computer program product (1000) comprising a computer readable medium (1010) having computer readable code (1020) embodied therein, the computer readable code being configured such that, on execution by a suitable computer or processor, the computer or processor is caused to perform the method of any of the claims 11-14.

### Embodiments III:

1. Drinking cup (100) comprising:
   - a wall (130) defining an inner space (131) for holding a fluid (10) having a fluid level (15);
   - an opening (110) for outflow of the fluid from the inner space;
   - a first sensor (170) extending from the opening, measuring a location of the fluid level; and
   - a second sensor (180);
   wherein the first sensor and the second sensor are arranged for measuring the fluid level.
2. Cup according to the preceding embodiment, wherein at least the first sensor is arranged to the wall, such as on, along and/or in the wall.
3. Cup according to any of the embodiments 1-2, wherein the second sensor comprises a second fluid level sensor extending from the opening, measuring a fluid level.
4. Cup according to the preceding embodiment, wherein the first sensor and the second fluid level sensor are arranged at non-opposing ends of the opening.
5. Cup according to any of the embodiments 3-4, wherein the second sensor comprises a third fluid level sensor extending from the opening, measuring a fluid level.
6. Cup according to the preceding embodiment, wherein the first sensor, the second fluid level sensor and the third fluid level sensor are arranged at non-opposing ends of the opening.
7. Cup according to any of the embodiments 1-6, wherein at least the first sensor is a capacitive level sensor (171).
8. Cup according to the preceding embodiment, wherein the capacitive level sensor comprises conductive strips (172, 172') arranged substantially parallel to each other.
9. Cup according to the preceding embodiment, wherein the capacitive level sensor comprises two conductive strips (172, 172') arranged substantially parallel to each other.
10. Cup according to any of the embodiments 7-9, comprising a shield (140) arranged for reducing an influence of a hand gripping the cup and/or lips drinking from the cup on the capacitive level sensor.
11. Cup according to any of the embodiments 1-10, wherein the second sensor comprises an angle measurement sensor (151) for measuring the angle of the cup, preferably with reference to a horizontal plane.
12. Cup according to any of the embodiments 1-11, wherein the second sensor comprises an acceleration sensor (152) for measuring the acceleration and based thereon determining the angle, such as a normal vector, of the cup, preferably with reference to a horizontal plane.
13. Cup according to the preceding embodiment, comprising a processor (160) arranged for performing the steps of:
   - receiving a measurement of the first sensor;
   - receiving a measurement of the second sensor;
   - calculating the fluid level based on the received measurements;
   - retrieving from a memory data defining the shape of the inner space; and
   - determining the volume of the fluid in the inner space based on the fluid level and the shape of the inner space.
14. Cup according to the preceding embodiment, wherein the processor is further arranged for performing the steps of:
   - storing the volume of the fluid; and
   - providing the volume of the fluid to an external device.
15. Computer program product (1000) comprising a computer readable medium (1010) having computer readable code (1020) embodied therein, the computer readable code being configured such that, on execution by a suitable computer or processor, the computer or processor is caused to perform the method of any of the claims 11-14.

### Embodiments IV:

1. Drinking cup (100) comprising:
   - an inner space (131) having a bottom part (132), which bottom part has a deepest location (133, 133'), wherein the inner space is arranged for holding a fluid (10) having a fluid level (15);
   - an opening (110) for outflow of the fluid from the inner space; and
   - a level sensor (170) extending from the opening towards the deepest location, measuring the fluid level;
   wherein when the cup is held in an upright orientation and when the fluid level rises through the bottom part, the bottom part of the inner space is shaped to have an increasing fluid level area.
2. Cup according to the preceding embodiment, wherein the bottom part has a tapered shape towards the deepest location and/or the deepest location is substantially a spot (126).
3. Cup according to the preceding embodiment, wherein the tapered shape defines an angle (α) within the range 40°-85°, preferably 55°-80°, more preferably 65°-85°, most preferably 70°-80°.
4. Cup according to any of the preceding embodiments, wherein the level sensor is arranged to the wall, such as on, along and/or in the wall.
5. Cup according to any of the embodiments 1-4, wherein the level sensor is a capacitive level sensor (171).
6. Cup according to the preceding embodiment, wherein the capacitive level sensor comprises conductive strips (172, 172') arranged substantially parallel to each other.
7. Cup according to the preceding embodiment, wherein the capacitive level sensor comprises two conductive strips (172, 172') arranged substantially parallel to each other.
8. Cup according to any of the embodiments 1-7, comprising a bottom surface substantially planar (136) and having an angle (β) in the range 10°-80°, preferably 15°-70°, more preferably 20°-50°, most preferably 30°-40°.

### Embodiments V:

1. Method for a drinking cup (100) comprising the steps of:
   - receiving (210) measurements from a motion detector (153);
   - if the motion detector detects motion, detecting (220) drinking from the cup by a user;
   - after detecting determining a current volume of a fluid (10) held in the cup;
   - retrieving a previous volume from a storage;
   - subtracting for determining a changed volume based on the current volume minus the previous volume;
   - accrediting the changed volume to a drunk volume;
   - comparing the drunk volume to a first set value providing a first comparison, wherein the first set value is a limit defining an edge of a range;
   - comparing the drunk volume with a second set value providing a second comparison, wherein the second set value is within a range limited by the first set value; and
   - signalling of the first and second comparison.
2. Method according to the preceding embodiment, wherein the first and/or second set value is depending on:
   - the type of the user drinking from the cup;
   - the age of the user;
   - the drinking history of the user; and/or
   - the disease of the user.
3. Method according to any of the embodiments 1-2, wherein the signalling step combines the first and second comparison in one signal.
4. Method according to any of the embodiments 1-3, wherein the signalling of the comparison is to the user.
5. Method according to any of the embodiments 1-4, wherein the signalling comprises visual signalling and/or tactile signalling.
6. Method according to the preceding embodiment,
   wherein the visual signalling comprises the step of signalling a drunk volume over the limit with a red light;
   wherein the visual signalling comprises the step of signalling a drunk volume within the range, but over the second set value with an orange light; and
   wherein the visual signalling otherwise comprises the step of signalling a drunk volume with a green light.
7. Method according to any of the embodiments 1-6, wherein the set value and the drunk volume are compared over time.
8. Drinking cup comprising:
   - an opening for outflow of a fluid held in the cup;
   - a motion detector for detecting motion of the cup;
   - a drinking sensor for detecting drinking of the outflow of the fluid;
   - a volume storage for storing a previous volume;
   - a set value storage for storing a set value;
   - a indicator for signalling the comparison; and
   - a processor arranged for performing the steps of any of the methods in embodiment 1-7.
9. Drinking cup according to the preceding embodiment, wherein the motion detector comprises an acceleration sensor.
10. Drinking cup according to the any of the embodiments 8-9, wherein the motion detector comprises a microswitch arranged for sensing contact of the cup with a resting surface.
11. Cup according to any of the embodiments 8-10, wherein the drinking sensor comprises a weight sensor for sensing the weight of the cup.
12. Computer program product (1000) comprising a computer readable medium (1010) having computer readable code (1020) embodied therein, the computer readable code being configured such that, on execution by a suitable computer or processor, the computer or processor is caused to perform the method of any of the claims 8-11.

## Claims

1. Drinking cup (100) comprising:
- an opening (110) for outflow of a fluid (10) held in the cup; and
- a drinking sensor (120) for detecting drinking of the outflow of the fluid,
wherein the drinking sensor is a capacitive drinking sensor (125) comprising conductive strips (126, 126', 126") arranged substantially in line with each other forming a ring on the outside of the cup and being arranged to the opening for detecting the presence of lips during the outflow.

2. Cup according to the preceding embodiment, wherein the drinking sensor is configured for discriminating between pouring out and drinking from the fluid in the cup.

3. Cup according to any of the embodiments 1-2, wherein the number of conductive strips is at least three.

4. Cup according to the preceding embodiment, comprising a shield (140) arranged for reducing an influence of the fluid in the cup on the capacitive drinking sensor.

5. Cup according to the preceding embodiment, comprising:
- a wall (130) defining an inner space (131) for holding the fluid having a fluid level (15);
- a first sensor (170) extending from the opening, measuring a location of the fluid level; and
- a second sensor (180);
wherein the first sensor and the second sensor are arranged for measuring the fluid level.

6. Cup according to the preceding embodiment, wherein the second sensor comprises a second fluid level sensor (181) extending from the opening, measuring a fluid level.

7. Cup according to any of the preceding embodiment, wherein the second sensor comprises a third fluid level sensor extending from the opening, measuring a fluid level.

8. Cup according to the preceding embodiment, wherein at least the first sensor is a capacitive level sensor (171) and the capacitive level sensor comprises conductive strips (172, 172') arranged substantially parallel to each other.

9. Cup according to the preceding embodiment, comprising a/the shield (140) arranged for reducing an influence of a hand gripping the cup and/or lips drinking from the cup on the capacitive level sensor.

10. Cup according to any of the preceding embodiment, comprising:
- an/the inner space (131) having a bottom part (132), which bottom part has a deepest location (133, 133'), wherein the inner space is arranged for holding the fluid having a/the fluid level (15); and
- a/the level sensor (171) extending from the opening towards the deepest location, measuring the fluid level;
wherein when the cup is held in an upright orientation and when the fluid level rises through the bottom part, the bottom part of the inner space is shaped to have an increasing fluid level area.

11. Cup according to the preceding embodiment, wherein the bottom part has a tapered shape towards the deepest location and the deepest location is substantially a spot (133).

12. Cup according to any of the preceding embodiments:
wherein the drinking sensor comprises an orientation sensor (150), preferably an acceleration sensor (152); and
wherein the cup comprises a processor (160) arranged for performing the steps of:
- receiving a measurement of the orientation sensor;
- calculating a position and/or an angle of the cup from the measurement;
- determining if the outflow of the fluid is drinking from the cup based on the position and/or the angle.

13. Cup according to the preceding embodiment, wherein the processor is further arranged for performing the step of:
- establish a trajectory covered by the cup from a plurality of positions and/or angles; and
wherein the determining step is based on the trajectory; and wherein the processor is preferably further arranged for performing the step of:
- retrieving a sprout setting and/or a straw setting;
wherein if the sprout or the straw setting is set, the determining step is solely based on the position and/or the angle of the cup.

14. Method for a processor of a drinking cup comprising the steps of:
- receiving measurements from a motion detector;
- if the motion detector detects motion, detecting drinking from the cup by a user by a capacitive drinking sensor (125) comprising conductive strips (126, 126', 126") arranged substantially in line with each other forming a ring on the outside of the cup and being arranged to an opening for detecting the presence of lips during the outflow;
- after detecting determining a current volume of a fluid held in the cup;
- retrieving a previous volume from a storage;
- subtracting for determining a changed volume based on the current volume minus the previous volume;
- accrediting the changed volume to a drunk volume;
- comparing the drunk volume to a first set value providing a first comparison, wherein the first set value is a limit defining an edge of a range;
- comparing the drunk volume with a second set value providing a second comparison, wherein the second set value is within a range limited by the first set value; and
- signalling of the first and second comparison.

15. Computer program product (1000) comprising a computer readable medium (1010) having computer readable code (1020) embodied therein, the computer readable code being configured such that, on execution by a suitable computer or processor, the computer or processor is caused to perform the method of any of the claim 14.
